# EUROPEAN PATENT APPLICATION

(11) **EP 1 477 364 A1**
(43) Date of publication of application: **17.11.2004**
(21) Application number: 03009889.1
(22) Date of filing: 15.05.2003
(51) Int. Cl.: B60R 1/02, B60R 1/072

(54) **An outside rear-view mirror arrangement**

(71) Applicant: Ford Global Technologies, LLC, Dearborn, MI 48126 (US)
(72) Inventor: Hallén, Anders, 429 33 Kullavik (SE)
(74) Representative: Spitmann, Knut Hermann

(57) **Abstract**

The present invention relates to an arrangement for increasing the field of view in a vehicle with a first actuating means (19) for actuating an adjusting device (17, 18) for adjusting the mirror position of an outside rear-view mirror (11, 12). A second actuating means (21) is coupled to said adjusting device (17, 18) for temporarily displacing said outside rear-view mirror (11, 12) to another mirror position at actuation of said second actuation means (21). The invention also relates to a vehicle comprising such an arrangement (10).

## Description

### TECHNICAL AREA

The present invention relates to an arrangement for increasing the field of view in a vehicle, wherein a first actuating means actuates an adjusting device for adjusting the mirror position of an outside rear-view mirror.

### BACKGROUND OF THE INVENTION

In conventional vehicles, the "blind spot area" is a well-known sector, which is located between the indirect field of view of the outside rear-view mirrors and the area that the driver of the vehicle perceives with his direct peripheral field of view. The blind spot area is mainly a concern when the driver intends to change lanes and needs to ensure that this driving manoeuvre can be performed without any risk for accidents and other incidents. The "blind spot" problem is mainly a result of the fact that a sufficiently wide field of view cannot be achieved within the constraints of the legal requirements of the current outside rear-view mirrors, their sizes and optical properties.

A method for reducing the described problem is to inform the driver if any objects exist in the blind spot area by means of cameras, image processing or telltales. The method might operate in several ways, e.g. a type of blind spot detection, which is always active. This first type of the method continuously provides information whether the driver intends to change lanes or not. However, the introduction of this type of blind spot detection system might lead to behaviour adaptation, leading drivers to blindly trust the system, which in turn might lead to dangerous situations. Moreover, if the information is continuously displayed it might also become annoying for the driver in the course of time. Alternatively, the method can also be activated only when the driver has indicated the intention to switch lanes. However, if the driver neglects to indicate the intention to switch lanes it might also lead to dangerous situations due to the lack of warning from the blind spot detection system. Consequently, it is important that this second type of the method is implemented in the vehicle in a carefully prepared way.

However, there exists a number of drawbacks with the described method, e.g. fog, heavy rain, dirt, etc. on the cameras or sensors may impair the performance of the method. In these cases, the cameras and the sensors are often located far away from the driver as well, why it is severe to wipe them of during driving.

In the present day situation, there already exist a number of technical solutions for increasing the field of view in a vehicle. The document EP 0 513 476 A1 discloses a view field display system, comprising view field sensors, which are arranged on appropriate locations onto the outer panel of the vehicle, and image transmitting means for transmitting the visual images sensed by the view field sensors to the vicinity of a dashboard panel located in front of the driver's seat. WO 90/01853 and US 5,574,443 further disclose different types of vehicle monitoring arrangements comprising a number of video cameras. The object of the described methods in these documents is to display a picture on a screen such as a TV screen located inside the vehicle as well.

However, there also exist other types of image processing arrangements not including transmitting means such as sensors and camera arrangements. For example, EP 0 152 181 shows a monitoring apparatus comprising a lens arrangement, which enables an increased field of view due to improved optical properties, e.g. so that a driver of a vehicle is able to monitor motor vehicles located rearward the vehicle.

US 6,273,576 B2 discloses a mirror arrangement comprising two mirrors, which are arranged so that the reflected images of the mirrors have no gap between them. In greater detail, the mirrors are separately adjustable around the horizontal and vertical adjustment axes in relation to each other for increasing the field of view and thereby providing a blind spot view for the driver. US 4,025,173 discloses an additional side-view mirror arrangement comprising two rotatable mirrors for varying the reflective field of view. One of the mirrors is rotatable relative to the second mirror for allowing a simultaneous rotation of both the mirrors in more than one selected fixed angular relationship.

### SUMMARY OF THE INVENTION

It is therefore an object of the present invention to provide an arrangement for optically increasing the field of view in a vehicle, or more particularly, it is an object to provide an arrangement for viewing and monitoring the so-called blind spot area.

It is also an object to provide an arrangement, which can be applied in connection with a vehicle substantially with the components already existing in a conventional vehicle in the present-day-situation, and consequently doesn't lead to increased costs.

Additionally, it is an object to provide an arrangement for increasing the field of view in a vehicle, which arrangement is easy to clean, even during driving, for maintaining the performance of the method. Further, it is necessary to provide an arrangement, which does not lead to behaviour adaptation and dangerous situations during driving.

These objects are achieved in accordance with the present invention by means of the arrangement for increasing the field of view in a vehicle as claimed in claim 1, wherein a second actuating means is coupled to said adjusting device for temporarily displacing said outside rear-view mirror to another mirror position at actuation of said second actuation means. Particularly, the mirror position of the outside rear-view mirror is temporarily modified so that the field of view of the driver is broadened outwards from the vehicle.

Preferably, the outside rear-view mirror returns to its previous mirror position or to another predetermined mirror position when the actuation of said second actuation means has ceased. Alternatively, the outside rear-view mirror is preferably displaceable to at least two mirror positions in succession before returning to the previous mirror position or to the other predetermined mirror position.

By means of the invention, the outside rear-view mirror is temporarily displaceable during a time period corresponding to a driving manoeuvre or sequence, e.g. an overtaking, a switch of lanes or a left or right turn. Accordingly, the mirror position of the outside rear-view mirror is temporarily changed to another mirror position. After that, the outside rear-view mirror return to its previous or original mirror position once again. In this context, the mirror position is preferably constituted of the position of the outside rear-view mirror with respect to e.g. the outer side panel of the vehicle.

Advantageously, the second actuating means is constituted of the turn signal stalk. Further, the driving device is preferably constituted by an electric motor, and the first actuating means is preferably constituted of the adjusting means of the outside rear-view mirrors.

### BRIEF DESCRIPTION OF THE DRAWINGS

The invention will be described in the following by way of example only and with reference to the embodiments illustrated in the drawings, in which:
- Fig. 1: is a top-view illustrating an arrangement for a driver for increasing the field of view of a driver in a vehicle,
- Fig. 2: is a block diagram illustrating the control circuit of the inventive arrangement, and
- Fig. 3: is an enlarged part of the top-view of Fig.1 illustrating the arrangement for increasing the field of view in a vehicle.

### DETAILED DESCRIPTION OF PREFERRED EMBODIMENTS

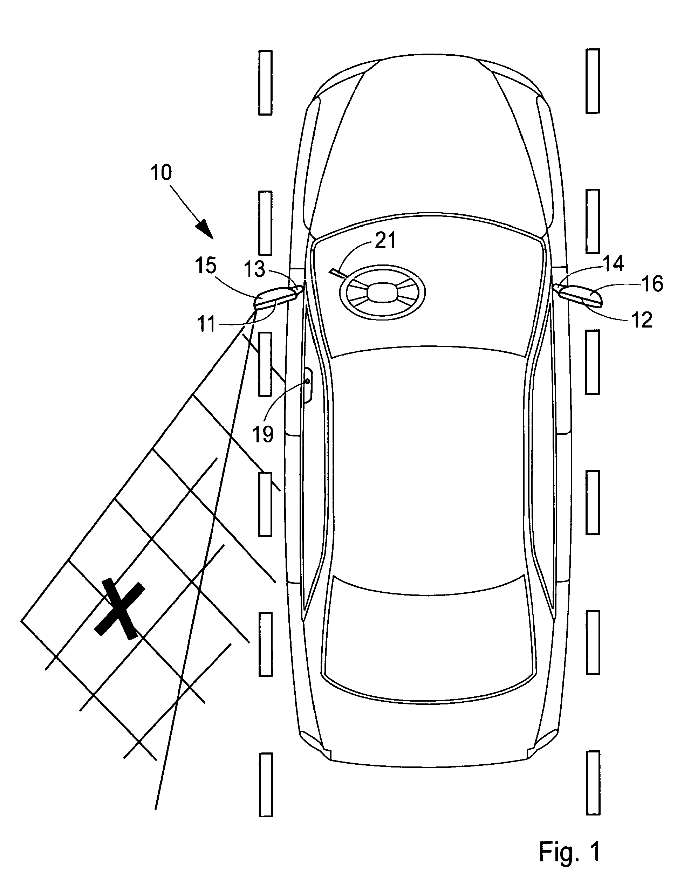

In the drawings, reference numeral 10 generally denotes an arrangement for increasing the field of view in a vehicle, see Fig.1. Particularly, the arrangement 10 can be used for viewing and monitoring the so-called blind spot area, being illustrated with the cross-sectioned area marked with "X" in Fig. 1. The inventive arrangement 10 is preferably arranged in connection with at least one outside rear-view mirror.

A vehicle in form of a conventional car is normally provided with two outside rear-view mirrors 11 and 12, whereof the first 11 is arranged at the left side of the vehicle and the second 12 is arranged at the right side of the vehicle, see Fig. 1. The two outside rear-view mirrors 11 and 12 are mounted onto the vehicle via an attachment joint 13 and 14 each. In greater detail, the two outside rear-view mirrors 11 and 12 are also provided inside a partly surrounding housing 15 and 16 each. Thereby the outside rear-view mirrors 11 and 12 in the housings 15 and 16 are displaceable around their respective attachment joint 13 and 14 by means of for example pivoting manual movements (not shown in the drawings.) In practise the driver generally retracts the outside rear-view mirrors 11 and 12 in the housings 15 and 16 inwards toward the side of the vehicle when parking or driving in narrow places or the like, and consequently, when the existing width of the vehicle needs to be reduced or minimised due to a lack of space.

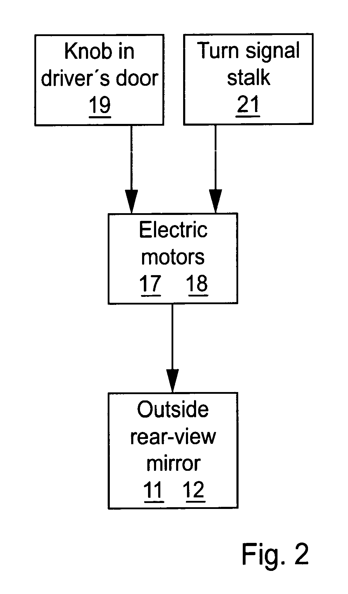

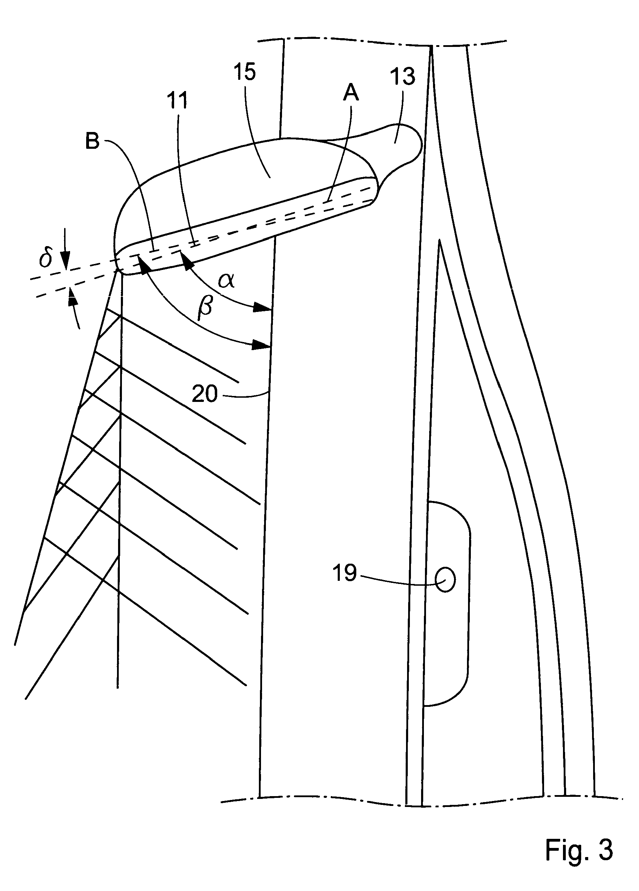

The mirrors 11 and 12 themselves are in their turn also displaceable in form of rotary movements when mounted inside the housings 15 and 16. The rotary movements are performed by at least one adjusting device. Preferably, the mirrors 11 and 12 are rotatable by means of one electric motor 17 and 18 each, see Fig. 2. In this way, the mirrors 11 and 12 can obtain other mirror positions in the housings 15 and 16 when being mounted therein. Fig. 3 shows one of the outside rear-view mirrors 11 in Fig. 1. The dashed lines marked with "A" and "B" constitutes concealed contours of the mirror 11 located in different mirror positions.

With reference to Fig. 3, in this context the "mirror position" refers to the position of the principal plane of the surface of the actual outside rear-view mirror 11 with respect to e.g. the respective outer side panel 20 of the vehicle, e.g. the door. Thus, the surfaces of the outside rear-view mirrors 11 and 12 are not necessary substantially plain in all conventional vehicles but can also be substantially convex or aspheric. Preferably, the surface of the outside rear-view mirror 11 and 12 is substantially convex to show a wider field of view for the driver.
However, each mirror position preferably depends on a combination of length and angle coordinates of the mirrors 11 and 12 (e.g. with respect to its centre of gravity) in a orthogonal system of coordinates according to well-known art. In this context, it is obvious that only the mirror angle α and β between the outside rear-view mirror 11 and e.g. the side panel 20 of the vehicle is affected by means of the inventive arrangement 10 since the mirrors 11 and 12 in Fig. 3only are affected in a horizontal plane.
Of course, the mirrors 11 and 12 can be affected both in a vertical and horizontal plane.

The described rotary movements of the mirrors 11 and 12 are actuated by a first actuating means 19 such as a knob being located adjacent the driver, for instance in the driver's door so that the driver is able to affect the mirror positions for obtaining the most advantageous view during driving, see Figs. 1 and 3. Thus, in this way the mirrors 11 and 12 can be permanently displaced to a second mirror position until the driver once again actuates the knob 19.

In a preferred embodiment of the invention, the arrangement 10 further comprises at least one second actuating means. Preferably, the second actuating means 21 is constituted of the turn signal stalk 21, see Fig. 2. Other examples of actuating means can be any actuating button or rod being located adjacent the driver, a voice signal, etc.
The turn signal stalk 21 initiates and triggers a signal, which is sent to the respective electric motor 17 and 18. Advantageously, the signal is constituted of the left or the right turn signal. However, the turn signal stalk 21 can also initiate at least one other type of signal, which can also be sent to the respective electric motor 17 and 18 without turn signal indication. In this case the signal can be activated by at least one additional spring load position of the turn signal stalk.

The signal incoming to the respective electric motor 17 and 18, triggers an actuation and a control thereof, constituting a type of control sequence, which is partly or completely specified in advance. The control sequence is constituted of the mirror positions of the mirrors 11 and 12, and the time that the mirrors 11 and 12 are maintained in each mirror position. Preferably, the mirror positions are determined in advance while the time that the mirrors 11 and 12 are maintained in each mirror position is controlled by the signal, constituting an activated condition.
However, the time in each mirror position can be predetermined as well. The mirrors 11 and 12 can return to their previous positions after a predetermined time period, e.g. before or after the actual signal is inactivated.
In other embodiments of the invention, it could be also be possible to adjust the actual mirror position before, during or after the control sequence, and even possible that the different mirror position(s) are stored in a memory unit to be the new mirror position henceforth.

In greater detail, the signal incoming to the left or right electric motor 17 and 18 corresponds to the activated conditions, "left turn signal stalk activated" or "right turn signal stalk activated", respectively. When any of the two conditions is activated, the respective mirror 11 and 12 is instantly displaced from a first mirror position A, having a mirror angle α, to a second mirror position B, having a mirror angle β, and is maintained therein during the activated condition. Then the mirror 11 and 12 is displaced the mirror angle δ. In the opposite, when the signal is turned off, it corresponds to an inactivated condition, e.g. "left turn signal stalk inactivated" or "right turn signal stalk inactivated", corresponding to that the respective mirror 11 and 12 returns to its previous or original final mirror position once again, which in this case is represented by mirror position A. Obviously, the inactivated conditions corresponds to the normal state of the mirrors 11 and 12 during driving as well. With "final" is herein intended the final mirror position for the actual driving manoeuvre.

In other embodiments of the invention, the mirrors 11 and 12 can also be displaced to at least two mirror positions in succession before returning to the previous or original mirror position. Instead of being displaced back to the previous or original mirror position, the mirrors 11 and 12 can of course be displaced to another predetermined final mirror position.

The actual turn signal is activated until the driver inactivates the turn signal by means of an additional actuation of the turn signal stalk 21 back to its inactivated position as mentioned above. The turn signal can also cease (or be inactivated) when the wheels of the vehicle are arranged straight forward once again during driving, after the driver has completed the actual driving manoeuvre.

In this context, "temporarily" refers to a time period corresponding to e.g. any of the following driving manoeuvres; switching lanes during driving, performing an overtaking, and watching for bicyclists and pedestrians at cycle paths and pavements at left or right turns. The turn signal stalk 21 is preferably actuated before any of the mentioned driving manoeuvres are initiated.

In the preferred embodiment of the invention, the mirrors 11 and 12 are thus temporarily displaceable in the housings 15 and 16. However, the mirrors can also be temporarily displaceable around the attachment links 13 and 14 in other embodiments of the invention.

The inventive arrangement 10 operates according to the following. When the driver wish to perform an overtaking during driving in right-hand traffic, he or she initially changes lanes from a first right lane to a second left lane. Before that, the driver performs a first driver's command in form of an actuation of the turn signal stalk 21. Then a signal is preferably sent from the turn signal stalk 21 to the left electric motor 17, representing "left turn signal stalk activated". When the left electric motor 17 senses that the left turn signal is activated, the left mirror 11 is temporarily displaced to a second mirror position B having the mirror angle β. In this way, the driver has the possibility to temporarily view and monitor the "blind spot area" X before and during the switch of lanes, see Figs. 1 and 3. The left mirror 11 remains in the second mirror position B until the driver inactivates the signal by means of another actuation of the turn signal stalk 21. Then the left mirror 11 returns to its previous mirror position A.
To complete the overtaking after having passed another fellow road user, the driver secondly changes lanes from the left lane back to the right lane. Consequently, the driver performs a second driver's command in form of an actuation of the turn signal stalk 21. Then a signal is preferably sent from the turn signal stalk 21 to the right electric motor 18, representing "right turn signal stalk activated". When the right electric motor 18 senses that the right turn signal is activated, the right mirror 12 is temporarily displaced to a second mirror position (not shown in figures) as well. Also in this situation, the driver has the possibility to temporarily view and monitor the "blind spot area" before and during the switch of lanes, but now on the right side of the vehicle. The right mirror 12 remains in the second mirror position until the driver inactivates the signal by means of another actuation of the turn signal stalk 21. After the driver has completed the overtaking, he or she can watch and monitor the regular sector in both the mirrors 11 and 12 once again.

The inventive arrangement 10 naturally operates in corresponding ways under all the described possible driving manoeuvres and sequences.

The invention has been described above and illustrated in the drawings by way of example only and the skilled person will recognise that various modifications may be made without departing from the scope of the invention as defined by the appended claims.

## Claims

1. An arrangement for increasing the field of view in a vehicle with a first actuating means (19) for actuating an adjusting device (17, 18) for adjusting the mirror position of an outside rear-view mirror (11, 12),
**characterised in that** a second actuating means (21) is coupled to said adjusting device (17, 18) for temporarily displacing said outside rear-view mirror (11, 12) to another mirror position at actuation of said second actuation means (21).

2. An arrangement as claimed in claim 1,
**characterised in that** said outside rear-view mirror (11, 12) returns to its previous mirror position or to another predetermined mirror position when the actuation of said second actuating means (21) has ceased.

3. An arrangement as claimed in claim 1 or 2,
**characterised in that** said outside rear-view mirror (11, 12) is temporarily displaceable during a time period corresponding to an overtaking, a switch of lanes or a left or a right turn.

4. An arrangement as claimed in anyone of the preceding claims,
**characterised in that** said second actuating means (2 1 ) is constituted of the turn signal stalk.

5. An arrangement as claimed in anyone of the preceding claims,
**characterised in that** the adjusting device (17, 18) is constituted by an electric motor.

6. A vehicle comprising an arrangement (10) for increasing the field of view, said vehicle being arranged with a at least one outside rear-view mirror (11, 12), the arrangement comprises a first actuating means (19) for actuating an adjusting device (17, 18) for adjusting the mirror position of an outside rear-view mirror (11, 12),
**characterised in that** a second actuating means (21) is coupled to said adjusting device (17, 18) for temporarily displacing said outside rear-view mirror (11, 12) to another mirror position at actuation of said second actuation means (21).
